# EUROPÄISCHE PATENTSCHRIFT

(11) **EP 1 456 690 B1**
(45) Veröffentlichungstag und Bekanntmachung des Hinweises auf die Patenterteilung: **31.12.2008**
(21) Anmeldenummer: 02798259.4
(22) Anmeldetag: 05.12.2002
(51) Int. Cl.: G01S 17/08, G01S 7/483, G01S 7/491

(54) **LASERENTFERNUNGSMESSGERÄT**
LASER DISTANCE MEASURING DEVICE
APPAREIL DE MESURE DE DISTANCE LASER

(30) Priorität: 08.12.2001 DE 10160439
(43) Veröffentlichungstag der Anmeldung: 15.09.2004
(73) Patentinhaber: ROBERT BOSCH GMBH, 70442 Stuttgart (DE)
(72) Erfinder: SCHMIDT, Dierk, 70771 Leinfelden-Echterdingen (DE); STIERLE, Joerg, 71111 Waldenbuch (DE); WOLF, Peter, 70771 Leinfelden-Echterdingen (DE)
(74) Vertreter: Daub, Thomas
(86) Internationale Anmeldenummer: PCT/DE2002/004460
(87) Internationale Veröffentlichungsnummer: WO 2003/050564

(56) Entgegenhaltungen:
- WO-A-00/33104
- US-A- 3 778 159
- US-A- 5 082 364
- US-A- 5 400 130
- US-A- 6 147 763

## Beschreibung

### Stand der Technik

Die Erfindung geht aus von einem Laserentfernungsmeßgerät nach dem Oberbegriff des Anspruchs 1.

Es sind Laserentfernungsmeßgeräte bekannt, die eine Sendereinheit mit einem Laser, eine Empfängereinheit sowie eine Einseitenbandmodulationseinheit aufweisen. Mit der Einseitenbandmodulationseinheit ist dabei mit einer von einer Oszillatoreinheit generierten Einseitenbandmodulationsfrequenz, die gleichzeitig einer Niederfrequenz bzw. einer Nutzfrequenz zur Phasenbestimmung entspricht, und mit einer Trägerfrequenz eine Modulationsfrequenz der Sendereinheit erzeugbar.

Als Demodulationsfrequenz der Empfängereinheit wird die ursprüngliche Trägerfrequenz genutzt.

Aus der US 3,778,159 ist ein Laserentfernungsmessgerät bekannt, welches eine Sendereinheit mit einem Laser und eine Empfängereinheit aufweist. Es umfasst ferner einen SSB-Filter (Single-Sideband Filter oder Einseitenbandmodulationsfilter), welcher bei der Bereitstellung eines Sendesignals eine Einseitenbandmodulationsfrequenz zur Herstellung einer Modulationsfrequenz in Kombination mit einer Trägerfrequenz erzeugt.. Nach dem Empfangen des auf ein Messobjekt reflektierten Sendesignals in der Empfängereinheit wird eine NF-Nutzfrequenz durch die Differenz der Modulationsfrequenz mit der Trägerfrequenz gegeben.

### Vorteile der Erfindung

Die Erfindung geht aus von einem Laserentfernungsmeßgerät, das eine Sendereinheit mit wenigstens einem Laser und eine Empfängereinheit sowie eine Einseitenbandmodulationseinheit aufweist, mit der mit einer von einer Oszillatoreinheit generierten ersten Einseitenbandmodulationsfrequenz und mit einer Trägerfrequenz eine als Seitenband ausgebildete Modulationsfrequenz der Sendereinheit erzeugbar ist.

Es wird vorgeschlagen, daß mit der Oszillatoreinheit zumindest eine weitere Frequenz generierbar ist, und über die Einseitenbandmodulationseinheit mit der weiteren Frequenz eine als Seitenband ausgebildete Demodulationsfrequenz der Empfängereinheit erzeugbar ist, wobei ein NF-Nutzsignal durch Mischen der Modulationsfrequenz und der Demodulationsfrequenz erzeugbar ist. Ein Abstand zwischen der Trägerfrequenz und der Modulationsfrequenz sowie der Demodulationsfrequenz kann unabhängig von einer Nutzfrequenz gewählt werden, und zwar kann dieser insbesondere größer gewählt werden als die Nutzfrequenz. Störgrößen können einfach eliminiert bzw. herausgefiltert werden, und zwar insbesondere wenn mit der Oszillatoreinheit zumindest eine zweite Einseitenbandmodulationsfrequenz generierbar ist, und über die Einseitenbandmodulationseinheit mit der zweiten Einseitenbandmodulationsfrequenz eine Demodulationsfrequenz der Empfängereinheit erzeugbar ist. Es können mit einem kostengünstigen Laserentfernungsmeßgerät hochgenaue Meßergebnisse erreicht werden. Anstatt mit einer zweiten Einseitenbandmodulationsfrequenz könnte auch mit einer zweiten Trägerfrequenz die Demodulationsfrequenz erzeugt werden.

Besitzt die Oszillatoreinheit einen einzelnen hochgenauen Oszillator, aus dem zumindest beide Einseitenbandmodulations-frequenzen generierbar sind und/oder ist die Oszillatoreinheit mit zumindest zwei Teilern mit unterschiedlichen Faktoren gekoppelt, über die die Einseitenbandmodulationsfrequenzen generierbar sind, können besonders kompakt bauende, kostengünstige und leichte Laserentfernungsmeßgeräte erreicht werden.

Besitzt die Oszillatoreinheit zumindest einen NF-Generator bzw. Niederfrequenz-Generator und ist wenigstens eine Einseitenbandmodulationsfrequenz über eine synthetische Frequenzverschiebung generierbar, kann eine hohe Flexibilität in der Frequenzerzeugung erreicht werden.

In einer weiteren Ausgestaltung der Erfindung wird vorgeschlagen, daß die Oszillatoreinheit eine PLL-Einheit bzw. eine Phase-Locked-Loop-Einheit zur Generierung der Trägerfrequenz aufweist, wodurch diese mit einer kostengünstigen Schaltung generierbar ist. Es ist jedoch auch möglich, daß aus einer Oszillatoreinheit mit zumindest zwei PLL-Einheiten zumindest zwei Trägerfrequenzen generierbar sind.

Ferner wird vorschlagen, daß über die Oszillatoreinheit und die Einseitenbandmodulationseinheit ein sinusförmiges Signal erzeugbar ist. Andere, dem Fachmann als sinnvoll erscheinende Signalformen sind jedoch auch denkbar. Filter können jedoch bei sinusförmigen Signalen besonders einfach zumindest reduziert oder vollständig vermieden werden. Zusätzliche Bauteile, Bauraum, Gewicht, Montageaufwand und Kosten können eingespart werden.

Die erfindungsgemäße Lösung eignet sich für sämtliche, dem Fachmann als geeignet erscheinende Laserentfernungsmeßgeräte, jedoch insbesondere für handgehaltene Laserentfernungsmeßgeräte, die mit der erfindungsgemäßen Lösung bei einer hohen Meßgenauigkeit dennoch kostengünstig und kompakt ausgeführt werden können.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein handgehaltenes Laserentfernungsmeßgerät schräg von oben,
- Fig. 2: einen schematisch dargestellten Schaltungsaufbau des Laserentfernungsmeßgeräts aus Fig. 1. und
- Fig. 3: eine schematische Darstellung eines Spektrums des Laserentfernungsmeßgeräts aus Fig. 1.

### Beschreibung des Ausführungsbeispiels

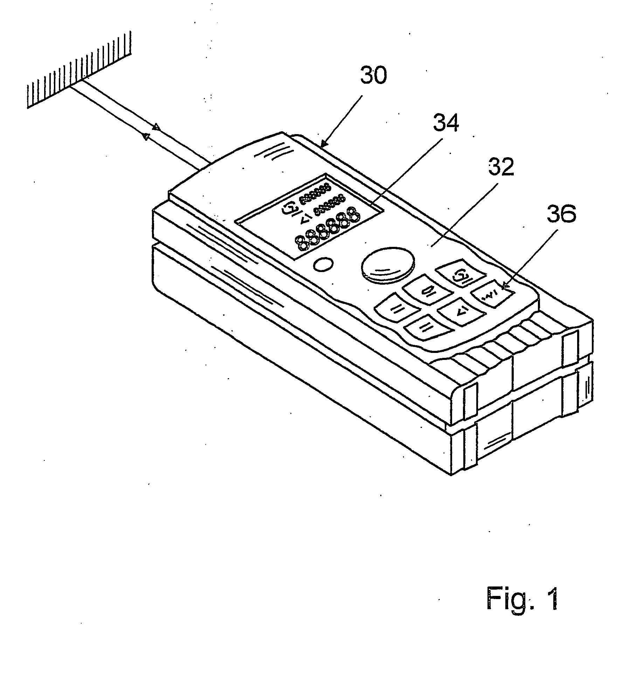

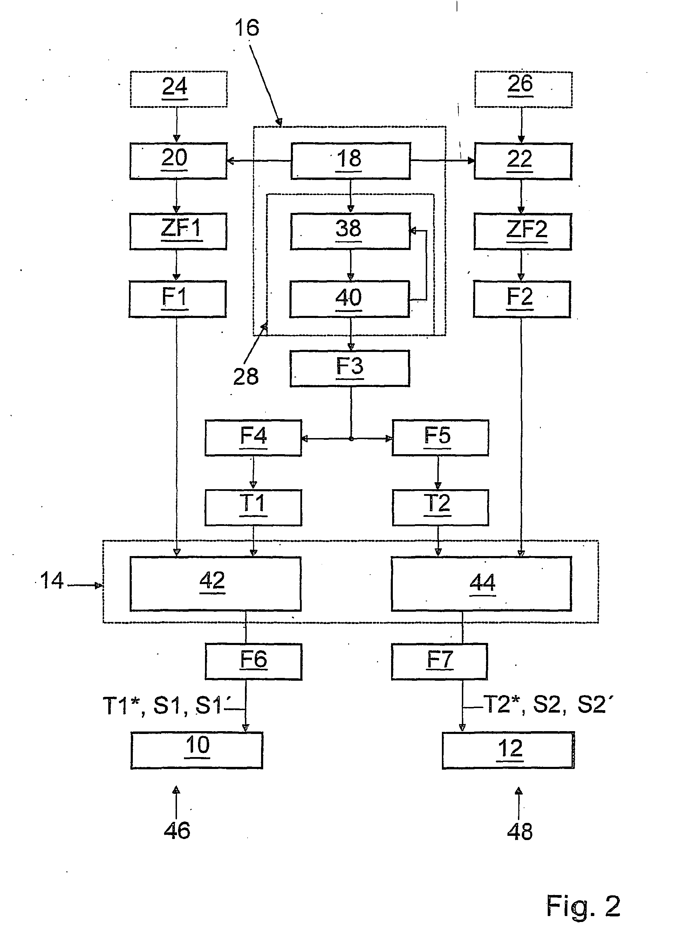

Fig. 1 zeigt ein Laserentfernungsmeßgerät mit einer im Gehäuse 30 angeordneten Sendereinheit 10 zum Aussenden eines Lasermeßsignals (Fig. 1 und 2). Die Sendereinheit 10 besitzt eine nicht näher dargestellte Laserdiode und eine Kollimationslinse, mit deren Hilfe das Meßsignal gebündelt durch einen Austrittskanal gelenkt werden kann.

Ferner besitzt das Laserentfernungsmeßgerät eine Empfängereinheit 12 mit einer nicht näher dargestellten Linse, die an einem Objekt reflektierte Meßsignal-Anteile einfängt und zu einem opto-elektronischen Wandler lenkt. Der Wandler, der vorzugsweise als Avalanche-Photodiode ausgebildet ist, empfängt die Meßsignal-Anteile und führt sie in elektrischer Form einer ebenfalls nicht näher dargestellten Recheneinheit bzw. Auswerteeinheit zu.

An einer Oberseite 32 des Laserentfernungsmeßgeräts befindet sich eine Anzeigevorrichtung 34. sowie mehrere Bedientasten 36 (Fig. 1) .

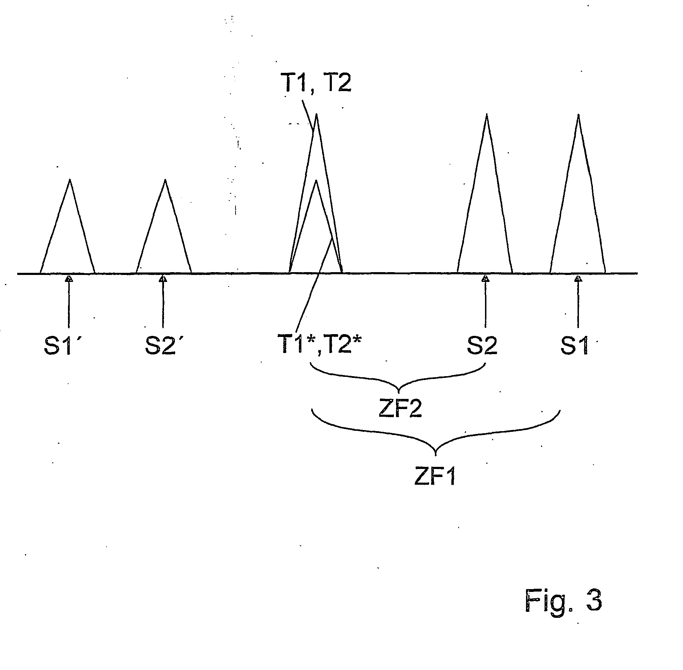

Ferner besitzt das Laserentfernungsmeßgerät eine Einseitenbandmodulationseinheit 14, mit der mit einer von einer Oszillatoreinheit 16 generierten Einseitenbandmodulationsfrequenz ZF1 und einer Trägerfrequenz T1 eine Modulationsfrequenz S1. der Sendereinheit 10 erzeugbar ist (Fig. 2 und 3).

Erfindungsgemäß ist mit der Oszillatoreinheit 16 eine zweite Einseitenbandmodulationsfrequenz ZF2 generierbar, wobei über die Einseitenbandmodulationseinheit 14 mit der zweiten Einseitenbandmodulationsfrequenz ZF2 eine Demodulationsfrequenz S2 der Empfängereinheit 12 erzeugbar ist.

Die Oszillatoreinheit 16 besitzt einen einzelnen hochgenauen Oszillator 18, aus dem die Einseitenbandmodulationsfrequenzen ZF1, ZF2 generierbar sind, und zwar über zwei Teiler 20, 22 mit unterschiedlichen Faktoren, die mit der Oszillatoreinheit 16 gekoppelt sind. Die Einseitenbandmodulationsfrequenz ZF1 und/oder ZF2 könnte jedoch auch mittels eines NF-Generators 24, 26 synthetisch generiert sein, wie dies in Fig. 2 angedeutet ist. Hierbei könnten die Teiler 20, 22 mit dem gleichen Faktor versehen sein.

Ferner sind aus dem hochgenauen Oszillator 18 die Trägerfrequenz T1 für die Sendereinheit 10 und eine Trägerfrequenz T2. für die Empfängereinheit 12 generierbar, und zwar über eine PLL-Einheit 28 der Oszillatoreinheit 16, die einen PLL-Block 38 bzw, einen Phase-Locked-Loop-Block und einen VCO-Block 40 bzw. einen Voltage-Controlled-Oscillator-Block aufweist. Die Trägerfrequenzen T1, T2 könnten jedoch auch aus getrennten Oszillatoren generiert sein.

Der Einseitenbandmodulationseinheit 14, die einen ersten Einseitenbandmodulator 42 für die Sendereinheit 10 und einen zweiten Einseitenbandmodulator 44 für die Empfängereinheit 12 aufweist, sind jeweils im Pfad 46 der Sendereinheit 10 und im Pfad 48 der Empfängereinheit 12 Filter F1, F2 vorgeschaltet, um aus den Einseitenbandmodulationsfrequenzen ZF1, ZF2, die auch als Zwischenfrequenzen bezeichnet werden können, ungewünschte Frequenzen herauszufiltern. Der Oszillatoreinheit 16 sind drei Filter F3, F4, F5 nachgeschaltet, und zwar ein zen-traler Filter F3 unmittelbar nach dem VCO-Block 40 und jeweils ein Filter F4 und F5 für den Pfad 46 der Sendereinheit 10 und den Pfad 48 der Empfängereinheit 12. Ferner ist nach der Einseitenbandmodulationseinheit 14 der Sendereinheit 10 und der Empfängereinheit 12 jeweils ein Filter F6, F7 vorge-schaltet.

Grundsätzlich könnten die Pfade 46, 48 für die Sendereinheit 10 und die Empfängereinheit 12 auch vertauscht werden bzw. könnte die Frequenz S2 zur Modulation der Sendereinheit 10 und die Frequenz S1 zur Demodulation der Empfängereinheit 12 genutzt werden.

Möglich wäre auch, daß über die Oszillatoreinheit 16 und die Einseitenbandmodulationseinheit 14 ein sinusförmiges Signal erzeugt wird, wodurch die Filter F1 F5 einfach eingespart werden könnten. Bei anderen Signalformen können Filter in verschiedener, dem Fachmann als sinnvoll erscheinender Anordnung und Kombination erforderlich sein, und zwar insbesondere in den Pfaden 46, 48 der Sendereinheit 10 und der Empfängereinheit 12. Die Filter F1- F5 dienen insbesondere dazu, eine bestimmte Meßgenauigkeit zu erzielen und die Bandbreite zu begrenzen.

Durch den Einseitenbandmodulator 42 der Einseitenbandmodulationseinheit 14 wird die Trägerfrequenz T1 mit der Einseitenbandmodulationsfrequenz ZF1 verschoben, wodurch die Modulationsfrequenz S1 der-Sendereinheit 10, die Frequenz S1' bzw. die Seitenbänder S1 und S1' sowie die Trägerfrequenz T1* entstehen. Durch den Einseitenbandmodulator 44 der Einseitenbandmodulationseinheit 14 wird die Trägerfrequenz T2 mit der Einseitenbandmodulationsfrequenz ZF2 verschoben, wodurch dies Demodulationsfrequenz S2 der Empfängereinheit 12, die Frequenz S2' bzw. die Seitenbänder S2 und S2' sowie die Trägerfrequenz T1* entstehen. Die Trägerfrequenzen T1, T2 besitzen eine größere Amplitude als die Trägerfrequenzen T1*, T2*, ansonsten sind die Trägerfrequenzen T1, T2, T1*, T2* identisch. Beim Entfallen der Filter F3 bis F5, welches bei geeigneter Wahl der Signalform möglich ist, würden die Trägerfrequenzen T1 und T2 zusammenfallen.

Die unterdrückten Frequenzen S1', S2' bzw. die unterdrückten Seitenbänder liegen ca. 40 dB unter der Modulationsfrequenz S1 der Sendereinheit 10 und der Demodulationsfrequenz S2 der Empfängereinheit 12. Ferner liegen die unterdrückten Trägerfrequenzen T1*, T2*-typischerweise bei ca. 40 dB unter der Modulationsfrequenz S1 der Sendereinheit 10 und der Demodulationsfrequenz S2 der Empfängereinheit 12.

Bei der Demodulation werden sämtliche Frequenzen T1*, S1, S1' des ersten Pfads 46 der Sendereinheit 10 mit sämtlichen Frequenzen T2*, S2, S2' des Pfads 48 der Empfängereinheit 12 gemischt. Sich hierbei ergebende Störvektoren sind wesentlich kleiner als bei herkömmlichen Systemen (S1'*S2' - ca. 80 dB) oder liegen in der Frequenz soweit von einem, NF-Nutzsignal, welches sich aus einer Differenz zwischen den Signalen des ersten Pfads 46 der Sendereinheit 10 und des Pfads 48 der Empfängereinheit 12 ergibt, entfernt (im Verhältnis Zwischenfrequenz zu NF-Nutzsignal), daß sie problemlos weggefiltert werden können. Insbesondere liegen die Vektoren, die durch Multiplikation der Frequenz S1' und der Trägerfrequenz T2* und durch Multiplikation der Frequenz S2' und der Trägerfrequenz T1* entstehen, bei geeigneter Wahl der Einseitenbandmodulationsfrequenzen ZF1, ZF2 weit über der Frequenz des NF-Nutzsignals, das durch Mischen der Modulationsfrequenz S1 und der Demodulationsfrequenz S2 entsteht und in diesem Ausführungsbeispiel ca. 4 kHz beträgt.

### Bezugszeichen

- 10: Sendereinheit
- 12: Empfängereinheit
- 14: Einseitenbandmodulationseinheit.
- 16: Oszillatoreinheit
- 18: Oszillator
- 20: Teiler
- 22: Teiler
- 24: NF-Generator
- 26: NF-Generator
- 28: PLL-Einheit

- 30: Gehäuse

- 32: Oberseite
- 34: Anzeigevorrichtung
- 36: Bedientasten
- 38: PLL-Block
- 40: VCO-Block
- 42: Einseitenbandmodulator
- 44: Einseitenbandmodulator
- 46: Pfad
- 48: Pfad

- T1: Trägerfrequenz
- T2: Trägerfrequenz
- S1: Modulationsfrequenz
- S2: Demodulationsfrequenz
- ZF1: Einseitenbandmodulationsfrequenz
- ZF2: Einseitenbandmodulationsfrequenz
- F1: Filter
- F2: Filter
- F3: Filter
- F4: Filter
- F5: Filter
- F6: Filter
- F7: Filter

## Patentansprüche

1. Laserentfernungsmeßgerät, das eine Sendereinheit (10) mit wenigstens einem Laser und eine Empfängereinheit (12) sowie eine Einseitenbandmodulationseinheit (14) aufweist, mit der mit einer von einer Oszillatoreinheit (16) generierten ersten Einseitenbandmodulationsfrequenz (ZF1) und mit einer Trägerfrequenz (T1) eine als Seitenband ausgebildete Modulationsfrequenz (S1) der Sendereinheit (10) erzeugbar ist, **dadurch gekennzeichnet, daß** mit der Oszillatoreinheit (16) zumindest eine zweite Einseitenbandmodulationsfrequenz (ZF2) generierbar ist, und über die Einseitenbandmodulationseinheit (14) mit der zweiten Einseitenbandmodulationsfrequenz (ZF2) eine als Seitenband ausgebildete Demodulationsfrequenz (S2) der Empfängereinheit (12) erzeugbar ist, wobei ein NF-Nutzsignal durch Mischen der Modulationsfrequenz (S1) und der Demodulationsfrequenz (S2) erzeugbar ist.

2. Laserentfernungsmeßgerät nach Anspruch 1, **dadurch gekennzeichnet, daß** die Oszillatoreinheit (16) einen einzelnen hochgenauen Oszillator (18) aufweist, aus dem zumindest beide Einseitenbandmodulationsfrequenzen (ZF1, ZF2) generierbar sind.

3. Laserentfernungsmeßgerät nach Anspruch 1 oder 2, **dadurch gekennzeichnet, daß** die Oszillatoreinheit (16) mit zwei Teilern (20, 22) mit unterschiedlichen Faktoren gekoppelt ist, über die die Einseitenbandmodulationsfrequenzen (ZF1, ZF2) generierbar sind.

4. Laserentfernungsmeßgerät nach einem der vorhergehenden Ansprüche, **dadurch gekennzeichnet, daß** die Oszillatoreinheit (16) zumindest einen NF-Generator (24, 26) aufweist und wenigstens eine Einseitenbandmodulationsfrequenz (ZF1, ZF2) über eine synthetische Frequenzverschiebung generierbar ist.

5. Laserentfernungsmeßgerät nach einem der vorhergehenden Ansprüche, **dadurch gekennzeichnet, daß** die Oszillatoreinheit (16) eine PLL-Einheit (28) zur Generierung der Trägerfrequenz (T1, T2) aufweist.

6. Laserentfernungsmeßgerät nach einem der vorhergehenden Ansprüche, **dadurch gekennzeichnet, daß** über die Oszillatoreinheit (16) und die Einseitenbandmodulationseinheit (14) ein sinusförmiges Signal erzeugbar ist.

7. Verfahren zur Signalerzeugung eines Laserentfernungsmeßgeräts mit einer Sendereinheit (10) und einer Empfängereinheit (12), bei dem mit einer Einseitenbandmodulationseinheit (14) mit einer von einer Oszillatoreinheit (16) generierten ersten Einseitenbandmodulationsfrequenz (ZF1) und einer Trägerfrequenz (T1) eine als Seitenband ausgebildete Modulationsfrequenz (S1) der Sendereinheit (10) erzeugt wird, **dadurch gekennzeichnet, daß** mit der Oszillatoreinheit (16) zumindest eine zweite Einseitenbandmodulationsfrequenz (ZF2) generiert und über die Einseitenbandmodulationseinheit (14) mit der zweiten Einseitenbandmodulationsfrequenz (ZF2) eine als Seitenband ausgebildete Demodulationsfrequenz (S2) der Empfängereinheit. (12) erzeugt wird und daß ein NF-Nutzsignal durch Mischen der Modulationsfrequenz (S1) und der Demodulationsfrequenz (S2) entsteht.

## Claims

1. Laser distance-measuring device which has a transmitter unit (10) with at least one laser, and a receiver unit (12) as well as a single sideband modulation unit (14) with the aid of which a modulation frequency (S1) of the transmitter unit (10) designed as sideband can be produced with a first single sideband modulation frequency (ZF1), generated by an oscillator unit (16), and with a carrier frequency (T1), **characterized in that** at least one second single sideband modulation frequency (ZF2) can be generated with the oscillator unit (16) and a demodulation frequency (S2) of the receiver unit (12) designed as sideband can be produced via the single sideband modulation unit (14) with the second single sideband modulation frequency (ZF2), it being possible to produce an NF useful signal by mixing the modulation frequency (S1) and the demodulation frequency (S2).

2. Laser distance-measuring device according to Claim 1, **characterized in that** the oscillator unit (16) has a single high precision oscillator (18) from which at least both single sideband modulation frequencies (ZF1, ZF2) can be generated.

3. Laser distance-measuring device according to Claim 1 or 2, **characterized in that** the oscillator unit (16) is coupled to two dividers (20, 22) having different factors and via which it is possible to generate the single sideband modulation frequencies (ZF1, ZF2).

4. Laser distance-measuring device according to one of the preceding claims, **characterized in that** the oscillator unit (16) has at least one NF generator (24, 26), and at least one single sideband modulation frequency (ZF1, ZF2) can be generated via synthetic frequency shifting.

5. Laser distance-measuring device according to one of the preceding claims, **characterized in that** the oscillator unit (16) has a PLL unit (28) for generating the carrier frequency (T1, T2).

6. Laser distance-measuring device according to one of the preceding claims, **characterized in that** a sinusoidal signal can be produced via the oscillator unit (16) and the single sideband modulation unit (14).

7. Method for signal production of a laser distance-measuring device having a transmitter unit (10) and a receiver unit (12), in the case of which method a modulation frequency (S1) of the transmitter unit (10) designed as sideband is produced with the aid of a single sideband modulation unit (14) with a first single sideband modulation frequency (ZF1), generated by an oscillator unit (16), and a carrier frequency (T1), **characterized in that** at least one second single sideband modulation frequency (ZF2) is generated with the oscillator unit (16) and a demodulation frequency (S2) of the receiver unit (12) designed as sideband is produced via the single sideband modulation unit (14) with the second single sideband modulation frequency (ZF2), and **in that** an NF useful signal results from mixing the modulation frequency (S1) and the demodulation frequency (S2).

## Revendications

1. Appareil de télémétrie à laser qui présente une unité d'émission (10) comprenant au moins un laser et une unité de réception (12) ainsi qu'une unité de modulation à bande latérale unique (14) qui permet de générer, avec une première fréquence de modulation à bande latérale unique (ZF1) générée par une unité à oscillateur (16) et avec une fréquence porteuse (T1), une fréquence de modulation (S1) de l'unité d'émission (10) configurée sous la forme d'une bande latérale, **caractérisé en ce que** l'unité à oscillateur (16) permet de générer au moins une deuxième fréquence de modulation à bande latérale unique (ZF2) et **en ce qu'**une fréquence de démodulation (S2) de l'unité de réception (12) configurée sous la forme d'une bande latérale peut être générée par le biais de l'unité de modulation à bande latérale unique (14) avec la deuxième fréquence de modulation à bande latérale unique (ZF2), un signal utile BF pouvant être généré en mélangeant la fréquence de modulation (S1) et la fréquence de démodulation (S2).

2. Appareil de télémétrie à laser selon la revendication 1, **caractérisé en ce que** l'unité à oscillateur (16) présente un unique oscillateur (18) de grande précision à partir duquel peuvent être générées au moins les deux fréquences de modulation à bande latérale unique (ZF1, ZF2).

3. Appareil de télémétrie à laser selon la revendication 1 ou 2, **caractérisé en ce que** l'unité à oscillateur (16) est connectée avec deux diviseurs (20, 22) ayant des facteurs différents par le biais desquels peuvent être générées les fréquences de modulation à bande latérale unique (ZF1, ZF2).

4. Appareil de télémétrie à laser selon l'une des revendications précédentes, **caractérisé en ce que** l'unité à oscillateur (16) présente au moins un générateur BF (24, 26) et **en ce qu'**au moins une fréquence de modulation à bande latérale unique (ZF1, ZF2) peut être générée par le biais d'un décalage de fréquence synthétique.

5. Appareil de télémétrie à laser selon l'une des revendications précédentes, **caractérisé en ce que** l'unité à oscillateur (16) présente une unité à PLL (28) pour générer la fréquence porteuse (T1, T2).

6. Appareil de télémétrie à laser selon l'une des revendications précédentes, **caractérisé en ce qu'**un signal sinusoïdal peut être généré par le biais de l'unité à oscillateur (16) et l'unité de modulation à bande latérale unique (14).

7. Procédé pour générer un signal d'un appareil de télémétrie à laser comprenant une unité d'émission (10) une unité de réception (12), une fréquence de modulation (S1) de l'unité d'émission (10) configurée sous la forme d'une bande latérale étant générée avec une unité de modulation à bande latérale unique (14) avec une première fréquence de modulation à bande latérale unique (ZF1) générée par une unité à oscillateur (16) et une fréquence porteuse (T1), **caractérisé en ce qu'**au moins une deuxième fréquence de modulation à bande latérale unique (ZF2) est générée avec l'unité à oscillateur (16) et **en ce qu'**une fréquence de démodulation (S2) de l'unité de réception (12) configurée sous la forme d'une bande latérale est générée par le biais de l'unité de modulation à bande latérale unique (14) avec la deuxième fréquence de modulation à bande latérale unique (ZF2) et **en ce qu'**un signal utile BF est produit en mélangeant la fréquence de modulation (S1) et la fréquence de démodulation (S2).
